# EUROPEAN PATENT SPECIFICATION

(11) **EP 1 301 110 B1**
(45) Date of publication and mention of the grant of the patent: **13.04.2005**
(21) Application number: 01950127.9
(22) Date of filing: 03.07.2001
(51) Int. Cl.: A47F 1/08, A47F 1/02

(54) **DEVICE FOR A DISPENSER**
VORRICHTUNG FÜR EINEN SPENDER
DISPOSITIF DESTINE A UN DISTRIBUTEUR

(30) Priority: 12.07.2000 SE 0002624
(43) Date of publication of application: 16.04.2003
(73) Proprietor: René Schander, Kenneth, 599 91 Ödeshög (SE)
(72) Inventor: René Schander, Kenneth, 599 91 Ödeshög (SE)
(86) International application number: PCT/SE2001/001525
(87) International publication number: WO 2002/003835

(56) References cited:
- EP-A1- 0 819 626
- DE-A- 1 964 396
- DE-C- 450 205
- US-A- 3 045 846
- US-A- 5 176 299

## Description

The present invention relates to a device for a dispenser for storing and outputting articles such as potatoes, onions or other bulk goods existing in stores, comprising a standing, preferably right-angled parallelepiped-container with a bottom, two side-walls, a front wall and rear wall, said container having an output opening over the whole width at the bottom of the front wall and a picking trolley with a waste-separating upper side placed adjacent to the output opening.

In stores and above all in supermarkets, devices for self-service of different root vegetables and vegetables such as potatoes, onions and the like. These usually consist of a right-angled, parallelepiped container with a bottom plane about 60 X 60 cm and a height of 60 - 80 cm. They are open at the top to allow filling and has an opening at the bottom, covering the whole width of the front side. The container is placed at a height making it comfortable for a person of normal size to pick up the goods on the picking trolley that is placed adjacent to the output opening.
Inside the lower part of the container there is an inclining plane extending from the lower edge of the output opening and toward the rear wall of the container. The purpose with the plane is to allow the all the content of the container to roll or slide out. Thus the inclination has to be relatively large, about 20 - 30 degrees considering that some articles are not round and do not roll out. Therefore the plane occupies a large volume that cannot be used and the inclination also results in a wedge up frequently causing the bulk goods to get stuck in the output opening. This results in that the customer picking goods from the picking trolley has to put the hand inside to release the goods, which frequency causes a small slide making goods falling on the floor. The problem is avoided by not filling the container to the brim. Together with the unused volume in the lower part of the container it has to be refilled quite often.
If the container is made larger by increased side length to provide space for more than one customer and to increase the volume, the inclination of the inner bottom plane has to be increased to ensure an even distribution of the goods over the whole output opening.

Refilling dispensers of prior art takes place by loading the goods from above. This results in dangerous lifting for the personnel if it is carried out manually, which can be the case for specific goods of the season, for instance fresh potatoes, when the container has to be refitted very frequently and a lifting device may not be available. It would be desirable that the container had a larger volume that could be effectively utilised and that refitting at rapid sate could be carried out for instance from the front side to avoid dangerous lifting.

The picking trolley placed adjacent to and in front of the output opening of the container has an upper side provided with a grate surrounded by inward inclining surfaces. Waste of soil or other undesired particles fall through the lattice and are collected in a shallow container underneath the grate. The container covers the whole surface under the upper part with the lattice and becomes rather large and cumbersome and cannot comfortably be emptied by a single person, as the weight is large due to the content. The large area of the container in combination with relatively low edges provides a poor rigidity, which also obstruct emptying without waste.

Several disadvantages with today's equipment are obvious; complicated refill, bad usage of the total volume, risk for wedging up of goods in the output opening, risk for slip when releasing goods and difficulties with emptying the litter container.

The object with the present invention is to achieve a device allowing that as well refill of bulk goods as emptying of the container and collection of separated litter easily and comfortably can be handled by one person.
This object is achieved with a device according to the introduction having the characteristics stated in claim 1.

A preferred embodiment of the invention will now be described more in detail with reference to the attached drawings, in which.
- Fig 1: shows a perspective view of a dispenser;
- Fig. 2: shows e view from behind of a picking trolley

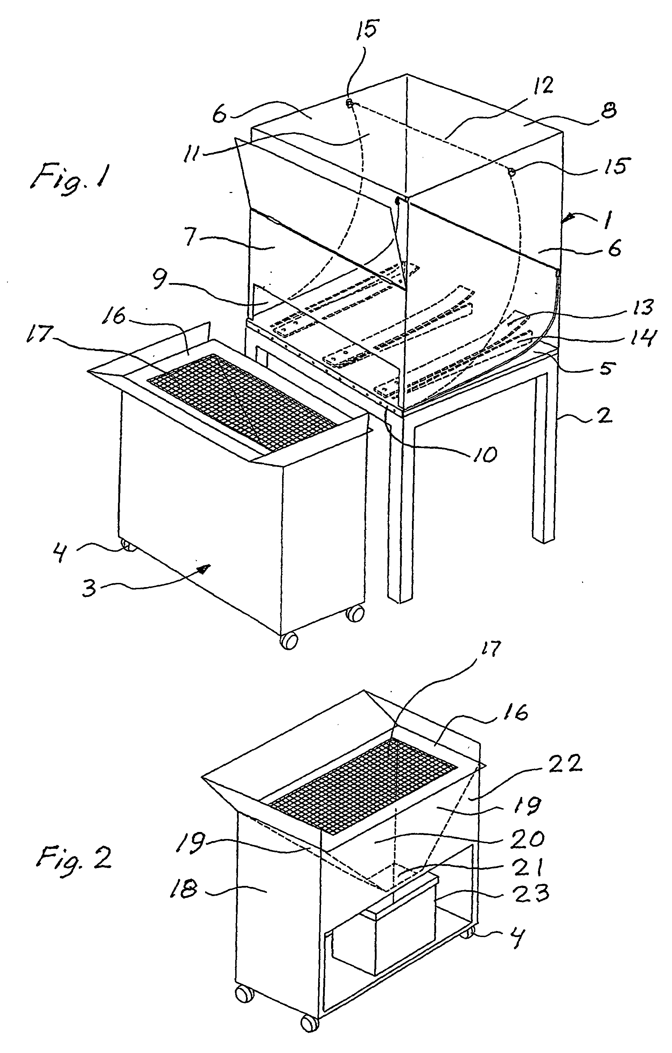

The dispenser showed in fig. 1 comprises two main parts: a container 1 placed on a stand 2 and a picking trolley 3 provided with castors 4.
The container has a bottom 5, two sidewalls 6, a front side 7 and a rear side 8. The container is open on top for refill. The front side 7, alternatively the sidewalls can be lowered at the half of their height to reduce the lifting height at frequent refills. If needed the sides of the container are designed to ventitate the content, for instance when storing of root vegetables and vegetables.

At the bottom of the front side 7 of the container there is an output opening 9 extending across the entire width of the container. It is provided with a hinged cover (not shown) that can be locked in opened position when used. The size of the opening is dependent of the type of goods in the container.
At the front edge of the container bottom 5, along its whole width, the lower edge 10 of a flexible wall is fixed. The flexible wall is made of a resilient corrosion resistant materrat such as carbon fibre, glass fibre reinforced plastic or stainless steel. The wall has substantially the form of an open cylindrical surface with the concave side facing the front wall of the container. When the container is empty and the flexible watt is unloaded, it stands up in the container with its upper edge 12 just under the upper edge of the container and approximately at the mid -point of the sidewalls. Directly under the lowest part of flexible wall, at the front edge of the bottom 5 of the container, front ends of at least three supporting elements 13 fixed. The supporting elements are made of resilient band material and have substantially the same shape as the flexible wall 11. The arc length of the supporting elements is adapted to prevent their ends from touching the rear wall of the container when they are pressed against the bottom of the container. The supporting elements are distributed to give the flexible wall an evenly spread support when the container is filled. A supporting beam 14 is placed adjacent to each supporting element 13. It is slightly wedge shaped with its point at the front edge of the container and extends to its rear side. The object with the beam is to prevent the flexible wall 11 to create a buckle due to its relatively strong bias inside the output opening and prevent the goods to be output when it is pressed down to the bottom
By means of its elasticity the flexible wall will lay flat along the major part of the wedge-shaped beams when the container is full and only create a small radius at the rear, lower part of the container. Thereby a very small part of the container volume will be unused. As mentioned by way of introduction, a traditional container has a strongly inclining plane on the bottom resulting in a substantially larger unused volume and easily causes wedging up of the goods in the container.
At emptying the container by picking goods in the output opening 9, the flexible wall will successively be raised by the resilient supporting elements 13. Then the flexible wall will create a continuously curved surface with an increasing slope inside the opening of the container and allow emptying of the container and prevent wedging up of the goods. With the described device the width of the container can be substantially extended providing space for more customers at the same time without creating problems. To prevent the upper edge 12 of the flexible wall 11 to take a warped position and be braked by friction against any of the sidewalls 6 during its movement upward or downward in the container, the upper corners are provided with backing rollers 15 that keep the flexible wall clear from the sidewalls and prevent braking.

The picking trolley 3, as shown in both fig.1 and fig. 2, has a flat upper side 16, preferably a smooth, stainless plate or other material that fulfils hygienic demands. The picking trolley is in a known way placed immediately in front of the output opening 9 of the container. The upper side 16 has low edges on the sides and in front to prevent goods to fall out. On the side toward the container the upper side 16 projects a little to cover the space that possibly can arise between the container and the picking trolley. Practically the entire surface of the upper side 16 is covered by a perforated plate 17, preferably in the shape of a grate with a mesh size determined by the size of the goods to be handled. The openings should be of a size that let larger lightweight waste like for instance onion shells through. Consequently, through the openings of the grate undesired solid or fluid impurities will be separated from the output goods independent of where it is located on the upper side. When in use, the picking trolley is fixed to the outside of the front legs of the stand 2 with for instance detachable rubber cords (not shown).

The under body of the picking trolley 18, shown from the rear side in fig. 2, has a funnel shaped inner part. The shape is achieved by that two inner sidewalls 19 and an inner, front wall meet deeply in a rectangular opening 21 inside the rear vertical wall 22 of the picking trolley. A box 23 is placed under the opening 21, at the bottom of the picking trolley. In the box waste collection equipment of standard type can be placed, for instance stands or containers for kitchen waste.

Due to the strong inclination of the inner walls of the under body towards the opening 21, waste, even light weight waste like onion shells and the like that fall through the perforated upper side, will be effectively moved to the collection equipment in the box 22. One person easily carries out emptying after having rolled the trolley away a bit from the container.

The invention is not limited to the embodiment that has been described together with the drawings. The invention can therefore be given different shapes within the scope of the appended claims. The flexible wall can for instance have a spring constant making the supporting elements 13 unnecessary for raising the wall for emptying the container.

## Claims

1. Device for a dispenser for storing and outputting articles such as potatoes, onions or other bulk goods existing in stores, comprising a standing, preferably right-angled parallelepiped-container (1) with a bottom (5), two side-walls (6), a front wall (7) and rear wall (8), said container having an output opening (9) over the whole width at the bottom of the front wall and a picking trolley (3) with a waste-separating upper side (16) placed adjacent to the output opening, **characterised by**
that a flexible wall (11) fixed at the front edge (10) of the bottom (5) of the container and extending over the entire width of the container with an open, substantially cylindrical shape, has its concave side facing the front wall (7) of the container and its free, upper edge (12) just below the centre part of the upper edges of the side walls,
that supporting elements (13) of resilient material with substantially the same shape as the flexible wall (11) and an arc length being somewhat shorter than the width of the sidewalls are fixed to the bottom (5) of the container under the flexible wall to support the flexible wall (11), said supporting elements (13) being straightened along the bottom (5) of the container when it is filled with bulk goods that makes the free edge (12) of the flexible wall moving along the rear wall (8) of the container until it takes a small inclination toward the output opening (9) and form a substantially smaller radius at the rear, lower comer of the container than in the unloaded position and when the container is gradually emptied through the output opening (9) successively being pressed upward by the supporting elements to its initial position so that the container will be completely emptied,
that the upper side (16) of the picking trolley (3) substantially is a grate (17), and
that inside the picking trolley, inner sidewalls (19) and an inner front wall (20) extending from the upper edges of the front and sidewalls decline toward an opening (21) inside a rear, vertical wall (22), under which opening a detachable collecting container (23) is placed.

2. Device according to claim 1, **characterised by** that the flexible wall, in its upper comers, is provided with backing rollers (15) that roll against the inside of the sidewalls (6) of the container (1) when the wall moves between its end positions, and
that wedge shaped beams (14), fixed to the bottom (5) of the container, support the flexible wall when it is in its lowest position.

3. Device according to claim 1, **characterised by** that the upper half of the front wall (7) can be lowered.

## Patentansprüche

1. Vorrichtung für einen Spenderbehälter zur Lagerung und Ausgabe von Artikeln wie Kartoffeln, Zwiebeln oder anderen losen Waren, die in Läden vorhanden sind, welche einen stehenden, bevorzugt rechtwinkligen, quaderförmigen Behälter (1) mit einem Boden (5), zwei Seitenwänden (6), einer Vorderwand (7) und einer Rückwand (8) aufweist, wobei der Behälter eine Ausgabeöffnung (9) über die gesamte Breite am unteren Ende der Vorderwand sowie einen Auffangwagen (3) mit einer Unrat abtrennenden Oberseite (16) aufweist, der neben der Ausgabeöffnung angeordnet ist, **dadurch gekennzeichnet,**
**dass** eine biegsame Wand (11) an der Vorderkante (10) des Bodens (5) des Behälters befestigt ist und sich über die gesamte Breite des Behälters erstreckt, wobei die Wand eine offene, im Wesentlichen zylindrische Form aufweist und ihre konkave Seite in Richtung der Vorderwand (7) des Behälters weist und ihre freie Oberkante (12) unmittelbar unterhalb des zentralen Teils der Oberkanten der Seitenwände positioniert ist,
**dass** Stützelemente (13) aus einem elastischen Werkstoff mit im Wesentlichen der selben Form wie die biegsame Wand (11) und einer Bogenlänge von etwas weniger als der Breite der Seitenwände am Boden (5) des Behälters unterhalb der biegsamen Wand befestigt sind, um die biegsame Wand (11) zu stützen, wobei die Stützelemente (13) gerade entlang des Bodens (5) des Behälters gedrückt werden, wenn er mit losen Waren gefüllt wird, wodurch die freie Kante (12) der biegsamen Wand sich entlang der Rückwand (8) des Behälters bewegt, bis sie eine geringe Neigung in Richtung der Ausgabeöffnung (9) annimmt und einen wesentlich geringeren Radius an der hinteren, unteren Ecke des Behälters bildet als in der unbeladenen Position, und wenn der Behälter allmählich durch die Ausgabeöffnung (9) entleert wird, nach und nach durch die Stützelemente nach oben in ihre Anfangsposition gedrückt wird, so dass der Behälter vollständig entleert wird,
**dass** die Oberseite (16) des Auffangwagens (3) im Wesentlichen einen Rost (17) darstellt, und
**dass** im Inneren des Auffangwagens Innenseitenwände (19) und eine Innenvorderwand (20), die sich von den Oberkanten der Vorderund Seitenwände erstrecken, in Richtung einer Öffnung (21) innerhalb einer vertikalen Rückwand (22) nach unten zusammenlaufen, unter welcher Öffnung ein entnehmbarer Sammelbehälter (23) angeordnet ist.

2. Vorrichtung nach Anspruch 1, **dadurch gekennzeichnet, dass** die biegsame Wand in ihren oberen Ecken mit Hilfsrollen (15) versehen ist, die an der Innenseite der Seitenwände (6) des Behälters (1) entlang rollen, wenn die Wand sich zwischen ihren Endpositionen bewegt, und
dass keilförmige Träger (14), die am Boden (5) des Behälters befestigt sind, die biegsame Wand tragen, wenn sie sich in ihrer niedrigsten Position befindet.

3. Vorrichtung nach Anspruch 1, **dadurch gekennzeichnet, dass** die obere Hälfte der Vorderwand (7) abgesenkt werden kann.

## Revendications

1. Dispositif pour un distributeur pour stocker et délivrer des articles comme des pommes de terre, des oignons ou d'autres produits en vrac présents dans des rayons, comprenant un support, de préférence un récipient parallélépipédique à angle droit (1) avec un fond (5), deux parois latérales (6), une paroi avant (7) et une paroi arrière (8), ledit récipient ayant une ouverture de sortie (9) sur l'entière largeur du fond de la paroi avant et un chariot (3) de recueil avec un côté supérieur (16) de séparation de rebut placé près de l'ouverture de sortie, **caractérisé en ce qu'**une paroi flexible (11) fixée au bord avant (10) du fond (5) du récipient et s'étendant sur toute la largeur du récipient avec une ouverture, de forme sensiblement conique, a son côté concave tourné vers la paroi avant (7) du récipient et son bord supérieur (12) libre juste en dessous de la partie centrale des bords supérieurs des parois latérales,
**en ce que** des éléments de support (13) en matériau élastique avec sensiblement la même forme que celle de la paroi flexible (11) et une longueur d'arc quelque peu plus courte que la largeur des parois latérales sont fixés au fond (5) du récipient sous la paroi flexible pour supporter la paroi flexible (11), lesdits éléments de support (13) étant redressés le long du fond (5) du récipient lorsqu'il est rempli avec des produits en vrac, qui constitue le bord libre (12) de la paroi flexible se déplaçant le long de la paroi arrière (8) du récipient jusqu'à ce qu'il prenne une petite inclinaison vers l'ouverture de sortie (9) et présentent un rayon sensiblement plus petit au coin inférieur arrière du récipient que dans la position non chargée et lorsque le récipient est graduellement vidé au travers de l'ouverture de sortie (9) en étant successivement poussé vers le haut par les éléments de support vers sa position initiale afin que le récipient soit complètement vidé,
**en ce que** le côté supérieur (16) du chariot de recueil (3) est essentiellement une grille (17), et
**en ce que**, à l'intérieur du chariot de recueil, les parois latérales intérieures (19) et une paroi avant intérieure (20) s'étendant à partir des bords supérieurs de la paroi avant et des parois latérales s'inclinent vers une ouverture (21) à l'intérieur d'une paroi verticale (22) arrière sous laquelle est placé un récipient de recueil (23) apte à être détaché.

2. Dispositif selon la revendication 1, **caractérisé en ce que** la paroi flexible dans ses coins supérieurs est munie de galets de support (15) qui roulent contre l'intérieur des parois latérales (6) du récipient (1) lorsque la paroi se déplace entre ses positions d'extrémité et **en ce que** des poutres (14) en forme de coin, fixées au fond (5) du récipient, supportent la paroi flexible lorsqu'elle se trouve dans sa position la plus basse.

3. Dispositif selon la revendication 1, **caractérisé en ce que** la moitié supérieure de la paroi avant (7) peut être abaissée.
